# EUROPÄISCHE PATENTANMELDUNG

(11) **EP 0 922 947 A1**
(43) Veröffentlichungstag der Anmeldung: **16.06.1999**
(21) Anmeldenummer: 98110792.3
(22) Anmeldetag: 12.06.1998
(51) Int. Cl.: G01L 23/22

(54) **Verfahren und System zur Detektierung von Klopferscheinungen in einem Verbrennungsmotor**

(30) Priorität: 13.12.1997 DE 29722031 U
(71) Anmelder: JENBACHER ENERGIESYSTEME AKTIENGESELLSCHAFT, A-6200 Jenbach (AT)
(72) Erfinder: Chvatal, Dieter, Dipl.Ing., A-6200 Jenbach (AT); Kneissel, Erik, A-6200 Wiesing 433 a (AT)
(74) Vertreter: Patentanwälte Dr. Solf & Zapf

(57) **Zusammenfassung**

Die Erfindung betrifft ein Verfahren zur Detektierung von Klopferscheinungen in einem Verbrennungsmotor. Es werden mittels eines Klopfsensors an jeweils einem Zylinder des Verbrennungsmotors Klopfsignale in einem Klopferkennungsfenster (W1) vor dem oberen Totpunkt des Kolbens des Verbrennungsmotors erfaßt. Die Erfindung betrifft weiterhin ein System zur Detektierung von Klopferscheinungen in einem Verbrennungsmotor, mit mindestens einem Klopfsensor und mit mindestens einem Kurbelwinkelsensor.Der Klopfsensor und der Kurbelwinkelsensor sind derart geschaltet, daß jeweils mittels des Klopfsensors an jeweils einem Zylinder des Verbrennungsmotors Klopfsignale in einem Klopferkennungsfenster (W1) vor dem oberen Totpunkt des Kolbens des Verbrennungsmotors erfaßt werden.

## Beschreibung

Die vorliegende Erfindung betrifft ein Verfahren zur Detektierung von Klopferscheinungen in einem Verbrennungsmotor. Des weiteren betrifft sie ein System zur Detektierung von Klopferscheinungen in einem Verbrennungsmotor, insbesondere zur Durchführung des Verfahrens, mit mindestens einem Klopfsensor und mit mindestens einem Kurbelwinkelsensor.

Als Klopfen wird eine in Verbrennungsmotoren auftretende unregelmäßige Verbrennung bezeichnet, die mit einem schlagartigen Ablauf verbunden ist. Das Klopfen äußert sich je nach Motor, Betriebsbedingungen und Kraftstoff durch ein Geräusch, das zwischen einem feinen Klingeln und harten hämmernden Schlägen liegt. Bei Otto-Motoren spricht man beispielsweise bei der Verbrennung nichtklopffester Kraftstoffe von einem Klopfen, bei Dieselmotoren bei der Verbrennung nichtzündwilliger Kraftstoffe von Dieselschlag, hartem Gang oder Nageln. Die negativen Folgen des Klopfens sind einerseits ein Leistungsabfall des Motors und andererseits Motorüberlastungen und -überhitzungen, Motorschäden, insbesondere an den Kolbenringen und am Kolben, bis hin zur Zerstörung des Motors.

Klopferscheinungen in Motoren sind darauf zurückzuführen, daß die Zündung des Kraftstoff-Luft-Gemisches zu einem falschen Zeitpunkt eintritt. Beim normalen Betrieb eines Otto-Motors kann das Kraftstoff-Luft-Gemisch etwa in dem Moment durch die Zündkerze entzündet werden, wenn der Kolben im Zylinder seinen höchsten Punkt, den sogenannten oberen Totpunkt erreicht hat. Diesem Punkt wird eine Stellung der Kurbelwelle mit einem Kurbelwinkel von Null Grad zugeordnet. Das Entzünden des Gemisches im oberen Totpunktbereich ist insbesondere deshalb wichtig, damit der Kraftstoff möglichst effektiv verbrennt und eine vollständige Verbrennung erfolgt. Zur Leistungssteigerung von Motoren hat es sich als günstig erwiesen, wenn die Zündung bereits kurz vor dem oberen Totpunkt (in einem negativen Kurbelwinkelbereich) erfolgt, weil die Verbrennung zu ihrer Entwicklung bei der Ausbreitung von der Zündkerze über den Verbrennungsraum eine gewisse Zeit benötigt. Wenn gegen Ende der durch den Zündfunken der Kerze eingeleiteten Verbrennung ein Teil von noch nicht verbranntem Kraftstoff-Luft-Gemisch durch die Volumenzunahme des bereits verbrannten Teils des Gemisches adiabat verdichtet wird, kann es sich über seine Selbstentzündungstemperatur hinaus erhitzen. Dann verbrennt nach einer kurzen Zeitspanne, dem sogennanten Zündverzug, das Restgemisch schlagartig. Das charakteristische Klopfgeräusch entsteht dabei durch die sich bei dieser Verbrennung bildenden und auf die Zylinderwandung aufprallenden Druckwellen. Klopfende Verbrennung tritt somit, abhängig vom Zündzeitpunkt, vom Zündverzug und vom Motortyp, wobei auch die Vorverdichtung und -erwärmung des Gemisches eine Rolle spielen, einige Grad Kurbelwinkel nach dem oberen Totpunkt des Kolbens auf.

Zur Erfassung des Klopfens werden Klopfdetektorvorrichtungen eingesetzt. Diese weisen mindestens einen Klopfsensor z.B. einen Druckfühler, zum Erfassen der Vibrationswellen des Motors und einem Kurbelwinkelsensor zum Erzeugen von Signalen, entsprechend einem vorbestimmten Kurbelwinkel des Motors auf. Über eine Setzschaltung, die eine Klopferfassungszeit festlegt, wird ein sogenanntes Klopferkennungsfenster so installiert, daß es z.B. am oberen Totpunkt des Kolbens beginnt und eine Breite von 20° bis 40° Kurbelwinkel aufweist. Bei dieser bekannten Detektion der klopfenden Verbrennung durch einen Klopfsensor kann die genaue Ursache des Klopfens nicht ermittelt werden.

Neben einem falschen Zündzeitpunkt oder ungenügender Klopffestigkeit des Treibstoff-Luft-Gemisches können nämlich auch Glühzündungen für den Klopfvorgang verantwortlich sein. Glühzündungen sind Zündungen, die von einzelnen heißen Stellen im Brennraum des Motors ausgehen, z.B. von heißen Auslaßventilen, glühenden Rußteilchen oder von den Elektroden der Zündkerze. Letzteres ist dann der Fall, wenn etwa Temperaturen ab etwa 850 °C erreicht werden. In diesem Temperaturbereich werden auch die Elektroden einer Zündkerze, beispielsweise durch Schwefel oder Bleioxyde, stark angegriffen und brennen sehr schnell ab.

Um dem Auftreten von Klopferscheinungen vorzubeugen oder ein beginnendes Klopfen auszuschalten, sind Klopfregelungen üblich, bei denen ein Verstellen des Zündzeitpunktes erfolgt. Beispielsweise können bei zunehmender Motordrehzahl durch eine Fliehkraftverstellung die Unterbrecherkontakte in Richtung eines früheren Zündzeitpunktes bewegt werden. Andere Regelungsverfahren, die auch mit der Fliehkraftverstellung kombiniert werden können, beruhen auf Druckmessungen im Ansaugkrümmer des Motors. Wenn jedoch Glühzündungen für den Klopfvorgang des Motors verantwortlich sind, versagen die bekannten Klopfregelungen, weil durch ein Verstellen des Zündzeitpunktes die Ursache des Klopfens nicht beseitigt werden kann.

Der Erfindung liegt die Aufgabe zugrunde, ein Verfahren und ein System der eingangs genannten Art zur Detektierung von Klopferscheinungen in einem Verbrennungsmotor zu schaffen, die es gestatten, zur Verhinderung einer uneffektiven Betriebsweise und von Motorschäden wirksame Gegenmaßnahmen in einer den Ursachen des Klopfens adäquaten Weise zu ergreifen, insbesondere auch dann, wenn die klopfende Verbrennung auf Glühzündungen zurückzufuhren ist.

Erfindungsgemäß wird dies einerseits durch ein Verfahren zur Detektierung von Klopferscheinungen in einem Verbrennungsmotor erreicht, bei dem jeweils mittels mindestens eines Klopfsensors an jeweils einem Zylinder des Verbrennungsmotors Klopfsignale in einem Klopferkennungsfenster vor dem oberen Totpunkt des Kolbens des Verbrennungsmotors erfaßt werden.

Andererseits wird das genannte Problem erfindungsgemäß mit einem System der eingangs genannten Art gelöst, bei dem der Klopfsensor und der Kurbelwinkelsensor derart geschaltet sind, daß jeweils mittels des Klopfsensors an jeweils einem Zylinder des Verbrennungsmotors Klopfsignale in einem Klopferkennungsfenster vor dem oberen Totpunkt des Kolbens des Verbrennungsmotors erfaßt werden.

Tritt klopfende Verbrennung vor dem vom Zündzeitpunkt, Zündverzug oder Motortyp abhängigen erwartungsgemäßen Zeitpunkt, also in dem Klopferkennungsfenster vor dem oberen Totpunkt des Kolbens des Verbrennungsmotors auf, so ist dies mit an Sicherheit grenzender Wahrscheinlichkeit auf eine Glühzündung zurückzuführen. Insbesondere ist das dann der Fall, wenn schon Klopfsignale im letzten Arbeitstakt vor dem Zeitpunkt der Zündung registriert werden können.

Aufgrund dessen hat es sich als zweckmäßig erwiesen, die Erfassung der Klopfsignale in einem Kurbelwinkelbereich von etwa 30°, vorzugsweise etwa 20°, vor dem oberen Totpunkt bis etwa zum oberen Totpunkt des Kolbens vorzunehmen. Die Installation des Klopferkennungsfensters kann dabei mittels einer bekannten Setzschaltung erfolgen. Zur Erfassung der Klopfsignale können mit Vorteil die im Verbrennungsraum des Verbrennungsmotors auftretenden Druckspitzen gemessen werden.

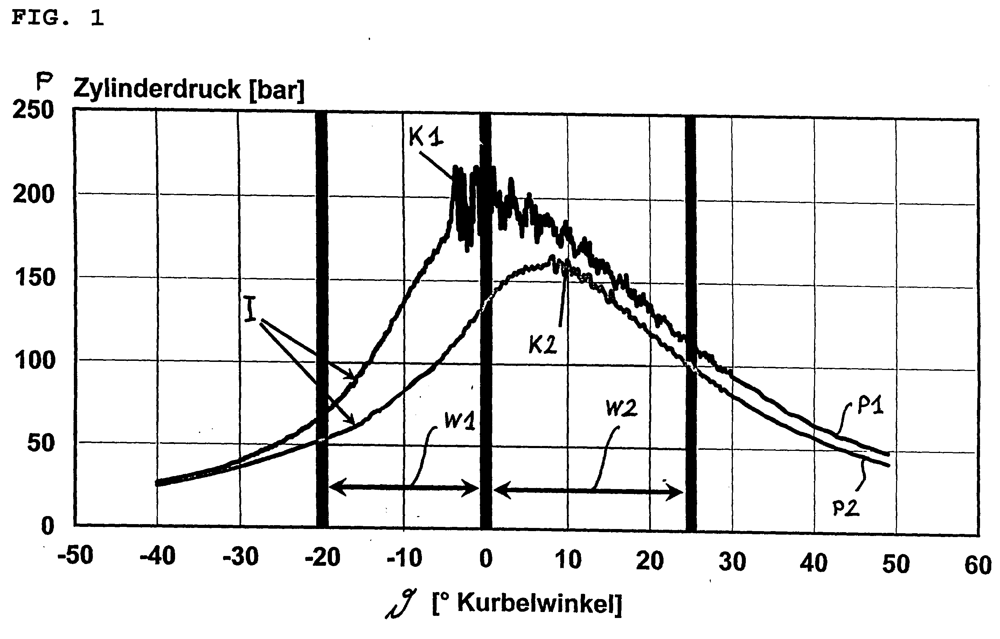

Weitere zweckmäßige Ausführungen der Erfindung sind in den Unteransprüchen und der nachfolgenden Beschreibung enthalten. Anhand eines in der Zeichnung dargestellten Ausführungsbeispiels wird die Erfindung näher erläutert. Dabei zeigt die einzige Fig. 1 eine vergleichende Darstellung zweier Verlaufsformen des Drucks in jeweils einem Zylinder eines Verbrennungsmotors in Abhängigkeit vom Kurbelwinkel.

In Fig. 1 sind in Abhängigkeit vom Kurbelwinkel ϑ zwei Druckverlaufskurven P1, P2 dargestellt. Die beiden Druckverlaufskurven P1, P2 ergeben sich daraus, daß zur Erfassung von Klopfsignalen mittels eines Klopfsensors der Druck P im Verbrennungsraum von Zylindern eines Verbrennungsmotors gemessen und der jeweiligen Stellung des Kolbens im Zylinder bzw. dem Drehwinkel der Kurbelwelle zugeordnet wird. Dem höchsten Punkt eines Kolbens im Zylinder, dem oberen Totpunkt, wird dabei eine Stellung der Kurbelwelle mit einem Kurbelwinkel ϑ von 0° zugeordnet.

In ihrer Grundgestalt besitzen die beiden Druckverlaufskurven P1, P2 etwa die Form einer Gaußschen Normalverteilungskurve, d.h. der Druck P steigt zunächst aufgrund der Verdichtung stetig an, in einem Bereich vor dem oberen Totpunkt (Kurbelwinkel ϑ etwa -15°) erfolgt die Zündung I des Kraftstoff-Luftgemisches, wodurch der Anstieg des Druckes P beschleunigt erfolgt, danach wird ein Maximum des Druckes erreicht, das in der oberen Druckverlaufskurve P1 etwa am oberen Totpunkt, in der unteren Druckverlaufskurve P2 nach dem oberen Totpunkt, bei einem Kurbelwinkel ϑ von etwa 7°, erreicht wird, schließlich fällt der Druck P wieder stetig ab.

Der Verlauf der beiden Druckverlaufskurven P1, P2 weist jedoch darauf hin, daß sowohl in dem Zylinder des Verbrennungsmotors, dem die in der Grafik obere Druckverlaufskurve P1 zugeordnet werden kann, als auch in dem Zylinder des Verbrennungsmotors, dem die in der in der Grafik untere Druckverlaufskurve P2 zugeordnet werden kann, Klopferscheinungen auftreten. Dies ist daran erkennbar, daß der Grundgestalt der beiden Druckverlaufskurven P1, P2 in kurzzeitigen Abständen auftretende Druckschwankungen überlagert sind. Insbesondere sind Druckspitzen K1, K2 zu erkennen, die auf eine schlagartige Verbrennung hinweisen, infolge derer auf die Zylinderwandung aufprallende Druckwellen entstehen.

Wie die Fig. 1 zeigt, ist die Schaltung des Klopfsensors und Kurbelwinkelsensors dergestalt konzipiert, daß mittels des erfindungsgemäßen Systems jeweils mit Hilfe der Klopfsensoren an den Zylindern des Verbrennungsmotors Klopfsignale in einem Klopferkennungsfenster W1 vor dem oberen Totpunkt des Kolbens des Verbrennungsmotors erfaßt werden. Diese Erfassung der Klopfsignale kann in einem Bereich des Kurbelwinkels ϑ von etwa 30°, vorzugsweise - wie dargestellt - von etwa 20°, vor dem oberen Totpunkt bis etwa zum oberen Totpunkt des Kolbens (- 30° bis 0° Kurbelwinkel ϑ) erfolgen. Durch diese Schaltung ist auch eine Erfassung von Klopfsignalen im jeweils letzten Arbeitstakt des Zylinders vor dem Zeitpunkt der Zündung I möglich. Durch das erfindungsgemäße System können über die klopfende Verbrennung im Klopferkennungsfenster W1 Glühzündungen nachgewiesen und dann gegebenenfalls über einen entsprechenden Eingriff in das Motormanagment Schäden verhindert werden.

Wird nämlich in dem Klopferkennungsfenster W1 - angezeigt durch die Druckspitzen K1 in der Druckverlaufskurve P1 - vor dem oberen Totpunkt des Kolbens klopfende Verbrennung, detektiert, so ist dies mit sehr hoher Wahrscheinlichkeit auf eine Glühzündung zurückzuführen, da eine klopfende Verbrennung, die - wie eingangs dargestellt - durch Selbstentzündung eines Teils des Gemisches, das nach der Zündung adiabat verdichtet wird, in der Regel erst einige Grad Kurbelwinkel nach dem oberen Totpunkt des Kolbens auftritt. Letzeres ist aus der unteren Druckverlaufskurve P2 - angezeigt durch die Druckspitzen K2 - ersichtlich.

Zur Verifizierung des Vorliegens von Glühzündungen kann nun das erfindungsgemäße System, d.h. es können insbesondere der Klopfsensor und der Kurbelwinkelsensor, derart geschaltet und mit der Zündung des Verbrennungsmotors derart verbunden sein, daß wenn innerhalb des Klopferkennungsfensters W1 vor dem oberen Totpunkt Klopfsignale K1 erfaßt werden, die Zündung I des betreffenden Zylinders für die nächsten Arbeitstakte, insbesondere für den nächsten Verbrennungstakt, abgeschaltet wird. Wenn nach dem Abschalten der Zündung I des Zylinders innerhalb des Klopferkennungsfensters W1 vor dem oberen Totpunkt des Kolbens noch weitere Klopfsignale K1 erfaßt werden, können spätestens jetzt Eingriffe in die Motorsteuerung erfolgen, dergestalt, daß durch eine entsprechende Verschaltung von Klopfsensor, Kurbelwinkelsensor und Kraftstoff-Zufuhr des Verbrennungsmotors die Leistung des Verbrennungsmotors, gegebenenfalls bis zum Abstellen des Verbrennungsmotors, gedrosselt wird.

Wenn nach der Drosselung der Leistung des Verbrennungsmotors innerhalb des Klopferkennungsfensters W1 vor dem oberen Totpunkt des Kolbens keine weiteren Klopfsignale K1 erfaßt werden, so ist dies ein Hinweis darauf, daß der kritische Temperaturbereich, in dem Glühzündungen auftreten, wieder unterschritten ist; die Leistung des Verbrennungsmotors kann mittels einer entsprechenden Schaltung wieder erhöht und die Zündung des betreffenden Zylinders wieder angeschaltet werden.

Fig. 1 veranschaulicht des weiteren, daß neben der Erfassung von Klopfsignalen K1 in dem beschriebenen ersten Klopferkennungsfenster W1 vorteilhafterweise jeweils mittels eines zweiten Klopfsensors an jeweils einem Zylinder des Verbrennungsmotors auch die Klopfsignale K2 in einem zweiten Klopferkennungsfenster W2 nach dem oberen Totpunkt des Kolbens erfaßt werden können. Die Erfassung der Klopfsignale K2 in dem zweiten Klopferkennungsfenster W2 kann dabei mit Vorteil in einem Bereich des Kurbelwinkels ϑ etwa vom oberen Totpunkt bis etwa 30°, vorzugsweise - wie dargestellt - etwa 25°, nach dem oberen Totpunkt des Kolbens erfolgen. Wenn innerhalb des zweiten Klopferkennungsfensters W2 nach dem oberen Totpunkt des Kolbens Klopfsignale K2 erfaßt werden, kann mit Hilfe des erfindungsgemäßen Systems eine Verstellung des Zeitpunktes der Zündung I eingeleitet werden.

Die vorliegende Erfindung ist nicht auf das dargestellte Ausführungsbeispiel beschränkt, sondern umfaßt alle im Sinne der Erfindung gleichwirkenden Ausführungsformen. Beispielsweise können vom Fachmann weitere technische Maßnahmen, wie eine Anordnung mehrerer Klopfsensoren an jeweils einem Zylinder, vorgesehen werden. Anstelle von Drucksensoren können auch anders geartete geeignete Sensoren, wie beispielsweise Beschleunigungssensoren zur Detektierung der Vibrationen der Zylinderwände verwendet werden. Es bestehen vielfältige Möglichkeiten zur Gestaltung der Setzschaltung für das Klopferkennungsfenster bzw. zur Erfassung des Kurbelwinkels ϑ mit geeigneten Sensoren.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- I: Zündung
- K1: Druckspitze in W1
- K2: Druckspitze in W2
- P: Zylinderdruck
- P1: erste Druckverlaufskurve
- P2: zweite Druckverlaufskurve
- W1: erstes Klopferkennungsfenster
- W2: zweites Klopferkennungsfenster
- ϑ: Kurbelwinkel

## Patentansprüche

1. Verfahren zur Detektierung von Klopferscheinungen in einem Verbrennungsmotor,
**dadurch gekennzeichnet,** daß jeweils mittels eines Klopfsensors an jeweils einem Zylinder des Verbrennungsmotors Klopfsignale in einem Klopferkennungsfenster (W1) vor dem oberen Totpunkt des Kolbens des Verbrennungsmotors erfaßt werden.

2. Verfahren nach Anspruch 1,
**dadurch gekennzeichnet,** daß die Erfassung der Klopfsignale im letzten Arbeitstakt vor dem Zeitpunkt der Zündung (I) erfolgt.

3. Verfahren nach Anspruch 1 oder 2,
**dadurch gekennzeichnet,** daß die Erfassung der Klopfsignale in einem Bereich des Kurbels (ϑ) von etwa 30°, vorzugsweise etwa 20°, vor dem oberen Totpunkt bis etwa zum oberen Totpunkt des Kolbens erfolgt.

4. Verfahren nach einem der Ansprüche 1 bis 3,
**dadurch gekennzeichnet,** daß, wenn innerhalb des Klopferkennungsfensters (W1) vor dem oberen Totpunkt des Kolbens Klopfsignale erfaßt werden, die Zündung (I) des Zylinders für die nächsten Arbeitstakte, insbesondere für den nächsten Verbrennungstakt, abgeschaltet wird.

5. Verfahren nach Anspruch 4,
**dadurch gekennzeichnet,** daß, wenn nach dem Abschalten der Zündung (I) des Zylinders innerhalb des Klopferkennungsfensters (W1) vor dem oberen Totpunkt des Kolbens weitere Klopfsignale erfaßt werden, die Leistung des Verbrennungsmotors, gegebenenfalls bis zum Anstellen des Verbrennungsmotors, gedrosselt wird.

6. Verfahren nach Anspruch 5,
**dadurch gekennzeichnet,** daß, wenn nach der Drosselung der Leistung des Verbrennungsmotors innerhalb des Klopferkennungsfensters (W1) vor dem oberen Totpunkt des Kolbens keine weiteren Klopfsignale erfaßt werden, die Leistung des Verbrennungsmotors wieder erhöht und die Zündung (I) des Zylinders wieder angeschaltet wird.

7. Verfahren nach einem der Ansprüche 1 bis 6,
**dadurch gekennzeichnet,** daß zur Erfassung der Klopfsignale im Verbrennungsraum des Verbrennungsmotors auftretende Druckspitzen (K1, K2) gemessen werden.

8. Verfahren nach einem der Ansprüche 1 bis 7,
**dadurch gekennzeichnet,** daß jeweils mittels eines Klopfsensors an jeweils einem Zylinder des Verbrennungsmotors Klopfsignale in einem zweiten Klopferkennungsfenster (W2) nach dem oberen Totpunkt des Kolbens erfaßt werden.

9. Verfahren nach Anspruch 8,
**dadurch gekennzeichnet,** daß die Erfassung der Klopfsignale in dem zweiten Klopferkennungsfenster (W2) in einem Bereich des Kurbelwinkels ϑ etwa vom oberen Totpunkt bis etwa 30°, vorzugsweise etwa 25°, nach dem oberen Totpunkt des Kolbens erfolgt.

10. Verfahren nach Anspruch 8 oder 9,
**dadurch gekennzeichnet,** daß, wenn innerhalb des zweiten Klopferkennungsfensters (W2) nach dem oberen Totpunkt des Kolbens Klopfsignale erfaßt werden, eine Verstellung des Zeitpunktes der Zündung (I) erfolgt.

11. System zur Detektierung von Klopferscheinungen in einem Verbrennungsmotor, insbesondere zur Durchführung eines Verfahrens nach einem oder mehreren der Ansprüche 1 bis 10, mit mindestens einem Klopfsensor und mit mindestens einem Kurbelwinkelsensor,
**dadurch gekennzeichnet,** daß der Klopfsensor und der Kurbelwinkelsensor derart geschaltet sind, daß jeweils mittels des Klopfsensors an jeweils einem Zylinder des Verbrennungsmotors Klopfsignale in einem Klopferkennungsfenster (W1) vor dem oberen Totpunkt des Kolbens des Verbrennungsmotors erfaßt werden.

12. System nach Anspruch 11,
**dadurch gekennzeichnet,** daß der Klopfsensor und der Kurbelwinkelsensor derart geschaltet sind, daß die Erfassung der Klopfsignale im letzten Arbeitstakt vor dem Zeitpunkt der Zündung (I) erfolgt.

13. System nach Anspruch 11 oder 12,
**dadurch gekennzeichnet,** daß der Klopfsensor und der Kurbelwinkelsensor derart geschaltet sind, daß die Erfassung der Klopfsignale in einem Bereich des Kurbelwinkels (ϑ) von etwa 30°, vorzugsweise etwa 20°, vor dem oberen Totpunkt bis etwa zum oberen Totpunkt des Kolbens erfolgt.

14. System nach einem der Ansprüche 11 bis 13,
**dadurch gekennzeichnet,** daß der Klopfsensor und der Kurbelwinkelsensor derart geschaltet und mit der Zündung des Verbrennungsmotors derart verbunden sind, daß, wenn innerhalb des Klopferkennungsfensters (W1) vor dem oberen Totpunkt des Kolbens Klopfsignale erfaßt werden, die Zündung (I) des Zylinders für die nächsten Arbeitstakte, insbesondere für den nächsten Verbrennungstakt, abgeschaltet wird.

15. System nach Anspruch 14,
**dadurch gekennzeichnet,** daß der Klopfsensor und der Kurbelwinkelsensor derart geschaltet und mit der Kraftstoff-Zufuhr des Verbrennungsmotors derart verbunden sind, daß, wenn nach dem Abschalten der Zündung (I) des Zylinders innerhalb des Klopferkennungsfensters (W1) vor dem oberen Totpunkt des Kolbens weitere Klopfsignale erfaßt werden, die Leistung des Verbrennungsmotors, gegebenenfalls bis zum Abstellen des Verbrennungsmotors, gedrosselt wird.

16. System nach Anspruch 15,
**dadurch gekennzeichnet,** daß der Klopfsensor und der Kurbelwinkelsensor derart geschaltet und mit der Kraftstoff-Zufuhr des Verbrennungsmotors sowie mit der Zündung des Verbrennungsmotors derart verbunden sind, daß, wenn nach der Drosselung der Leistung des Verbrennungsmotors innerhalb des Klopferkennungsfensters (W1) vor dem oberen Totpunkt des Kolbens keine weiteren Klopfsignale erfaßt werden, die Leistung des Verbrennungsmotors wieder erhöht und die Zündung (I) des Zylinders wieder angeschaltet wird.

17. System nach einem der Ansprüche 11 bis 16,
**dadurch gekennzeichnet,** daß zur Erfassung der Klopfsignale im Verbrennungsraum des Verbrennungsmotors Drucksensoren zur Messung der auftretenden Druckspitzen (K1, K2) vorgesehen sind.

18. System nach einem der Ansprüche 11 bis 17,
**dadurch gekennzeichnet,** daß jeweils an einem Zylinder des Verbrennungsmotors ein zweiter Klopfsensor vorgesehen ist und dieser Klopfsensor und der Kurbelwinkelsensor derart geschaltet sind, daß jeweils mittels des zweiten Klopfsensors an dem Zylinder Klopfsignale in einem zweiten Klopferkennungsfenster (W2) nach dem oberen Totpunkt des Kolbens erfaßt werden.

19. System nach Anspruch 18,
**dadurch gekennzeichnet,** daß der zweite Klopfsensor und der Kurbelwinkelsensor derart geschaltet sind, daß die Erfassung der Klopfsignale in dem zweiten Klopferkennungsfenster (W2) in einem Bereich des Kurbelwinkels ϑ etwa vom oberen Totpunkt bis etwa 30°, vorzugsweise etwa 25°, nach dem oberen Totpunkt des Kolbens erfolgt.

20. System nach Anspruch 18 oder 19,
**dadurch gekennzeichnet,** daß der zweite Klopfsensor und der Kurbelwinkelsensor derart geschaltet sowie mit der Zündung des Verbrennungsmotors derart verbunden sind, daß, wenn innerhalb des zweiten Klopferkennungsfensters (W2) nach dem oberen Totpunkt des Kolbens Klopfsignale erfaßt werden, eine Verstellung des Zeitpunktes der Zündung (I) erfolgt.
